# EUROPEAN PATENT SPECIFICATION

(11) **EP 1 643 851 B1**
(45) Date of publication and mention of the grant of the patent: **24.03.2010**
(21) Application number: 04748716.0
(22) Date of filing: 08.07.2004
(51) Int. Cl.: A23J 3/08, A23J 3/10, A23J 3/22, A23J 3/26, A23C 19/09, A23L 1/16, A23L 1/0532, A23L 1/0524, A23L 1/054

(54) **METHOD FOR PREPARING A PROTEIN-BASED, FIBRE-CONTAINING FOOD PRODUCT, AND FIBRE-CONTAINING FOOD PRODUCT OBTAINED BY THE METHOD**
VERFAHREN ZUR HERSTELLUNG EINES BALLASTSTOFFE ENTHALTENDES LEBENSMITTEL AUF PROTEINBASIS UND SO HERGESTELLTES BALLASTSTOFFE ENTHALTENDES LEBENSMITTEL
PROCEDE DE PREPARATION D'UN PRODUIT ALIMENTAIRE COMPRENANT DES FIBRES, A BASE DE PROTEINES ET PRODUIT ALIMENTAIRE COMPRENANT DES FIBRES AINSI OBTENU

(30) Priority: 11.07.2003 NL 1023907
(43) Date of publication of application: 12.04.2006
(73) Proprietor: NUG NAHRUNGS-UND GENUSSMITTEL VERTRIEBSGESELLSCHAFT MBH, 71334 Waiblingen (DE)
(72) Inventor: VAN SEPTER-BEKHUIS, Anna, Maria, NL-3902 JE Veenendaal (NL); SMITS, Christiaan, Theodoor, Gerardus, NL-5251 WK Vlijmen (NL)
(74) Representative: van Westenbrugge, Andries
(86) International application number: PCT/NL2004/000490
(87) International publication number: WO 2005/004624

(56) References cited:
- EP-A- 0 591 793
- WO-A-02/056705
- GB-A- 1 474 629
- NL-C- 1 008 364
- US-A- 3 093 483
- US-A- 3 627 536
- US-A- 4 592 913
- US-A- 5 100 681
- US-A- 5 211 977
- US-A- 5 368 871
- US-A- 5 783 241
- PATENT ABSTRACTS OF JAPAN vol. 011, no. 282 (C-446), 11 September 1987 (1987-09-11) & JP 62 079749 A (TAIYO FISHERY CO LTD), 13 April 1987 (1987-04-13)
- DATABASE WPI Section Ch, Week 198510 Derwent Publications Ltd., London, GB; Class D11, AN 1985-058062 XP002270861 & JP 60 012946 A (MARUMI KK) 23 January 1985 (1985-01-23)

## Description

The invention relates to a method for preparing a protein-based, fibre-comprising food product.

A method of this type is described in PCT patent application PCT/NL02/00594, which was not published before the filing date of the present application, in the name of the Applicant.

The said application describes a method for preparing a protein-containing, fibre-comprising product, in which:
1. a protein material, a hydrocolloid that precipitates with metal cations and water are added to one another;
2. the composition from step 1 is made into a homogenous mixture;
3. the mixture from 2 is mixed with a solution of a metal cation with a valency of at least 2 in order to form a fibre-comprising product;
4. the fibre-comprising product is isolated,
which method is characterized in that the protein material comprises a milk protein material and the mixture of milk protein material, hydrocolloid that precipitates with metal cations and water is formed in the presence of a quantity of a phosphate material. With regard to the phosphate material, the abovementioned International Application states that this may also be another material which is able to complex the calcium ions that are present in the milk protein material, such as EDTA. Other materials can also be used, and since this is the foodstuffs sector, it will also be possible to use a material such as sodium citrate. Therefore, wherever the present application refers to phosphate material as the material that can be used to bind/complex calcium ions, it should be understood that it is also possible for other materials to be used for the same purpose, such as EDTA, sodium citrate and the like.

US 3,093,483 describes a process for preparing a food product having a fibrous texture which comprises forming a sol of a polymeric carbohydrate gel precursor capable of producing a continuous thermostable gel, forming said gel into oriented, gelled fibers, said gelation being caused by the use of an alkaline earth metal ion. Example IV of this US patent describes the preparation of high protein fibres by extruding an aqueous colloidal solutions containing sodium alginate and casein through a spinneret into a coagulating vat containing calcium acetate and acetic acid.

Depending on the material that complexes calcium ions which is used, it may be necessary to adapt the pH of the homogenous mixture prior to mixing with the solution of metal cations with a valency of at least 2. To form the fibres, the pH of the said mixture has to be set in the range from 4-7. To obtain a product with meat-like properties, the pH will expediently be set in the range from 5.0-7.0.
To obtain a product with fish-like properties, it is preferable to maintain a range from 4.5-6.0.

The quantity of phosphate material or other suitable material that complexes calcium ions which is used is at least sufficient to bind the quantity of free calcium ions that is present in the milk protein material. When used as the material for complexing calcium ions, the quantity of phosphate material is generally 0.1-1.5% by weight, based on the total of all the constituents of the homogenous mixture. The phosphate material used may be all food-grade phosphate materials; mention may be made of disodium hydrogen phosphate, sodium hexametaphosphate, trisodium phosphate and sodium polyphosphate (NaPO₃)ₙ, with n≈25.

It is an object of the present application to provide a new embodiment of the method described in PCT/NL02/00594, and accordingly the present invention relates to a method for preparing a protein-based, fibre-comprising food product, in which:
1) a hydrocolloid that precipitates with metal cations and a composition that comprises milk protein material are mixed with one another in aqueous solution in the presence of a quantity of a material which is able to complex calcium ions,
2) the composition from 1) is made into a homogenous mixture,
3) the homogenous mixture from 2) is given a selected three-dimensional shape with the aid of a shaping process,
4) the three-dimensional shape from 3) is brought into contact with an aqueous solution of a metal cation with a valency of at least 2 to form a product that comprises precipitated hydrocolloid.

This is because it has been found that the method described in the abovementioned PCT patent application, which was not published before the filing date of the present application, can be carried out in such a manner that a fibre-comprising food product is obtained in a selected three-dimensional shape which is matched to the type of shapes to which the consumer is accustomed.

The method as described above in accordance with the invention comprises a number of steps and expediently incorporates, in particular in step 1), a refinement which leads to favourable results in terms of controllability of the method.

In a first variant, in step 1) an aqueous solution of a hydrocolloid that precipitates with metal cations is made, and this solution is introduced into a liquid composition comprising a milk protein material and a material that is able to complex calcium ions. This is because it has been found that in terms of controllability of the method, forming an aqueous solution of a hydrocolloid that precipitates with metal cations first and adding this solution to a liquid composition comprising a milk protein material and a material that is able to complex calcium ions, such as a phosphate material, leads to better controllability of the method, and in particular prevents lumps of the hydrocolloid from forming. As will be explained in more detail below, this method embodiment reduces the quantities of raw materials required.

On the other hand, it is, of course, also possible, in the first step of the method, simply to mix the milk protein material, a hydrocolloid that precipitates with metal cations, a material that is able to complex calcium ions, such as phosphate material, and water with one another directly in the desired ratio, in which case the formation of lumps is avoided by careful metering and vigorous stirring.

Once the homogenous mixture that is formed in step 2) of the method is obtained, a selected three-dimensional shape is imparted to this mixture in accordance with the present invention.

In the first embodiment, the homogenous mixture is discharged into the aqueous solution of a metal cation with a valency of at least 2 in order to form a strand which, at least at the surface, comprises hydrocolloid that has precipitated with metal cations. The homogenous mixture comprises milk protein material, hydrocolloid that precipitates with metal cations and a material that complexes calcium ions, such as a phosphate material; discharging the strand which is formed into an aqueous solution that contains metal cations with a valency of at least 2 means that the strand which is formed, starting at its surface, is set through precipitation of the hydrocolloid with metal cations. The skin of precipitated colloid and milk protein material formed on the strand forms a barrier to diffusion of metal cations to the interior of the strand; obviously, it is possible for all the hydrocolloid in the strand to be precipitated if the contact with the aqueous solution of metal cations is maintained for long enough and/or the ion concentration is made sufficiently high.

In particular, however, the strand, after it has been formed, is rinsed with water in order to wash out metal cations with a valency of at least 2 that have not yet reacted with hydrocolloid. Thorough rinsing with water, such as tap water, causes the metal cations that are present in excess to be rinsed out of the surface of the strand, so that no further hydrocolloid precipitation can occur. The result is a strand of milk protein material/hydrocolloid/phosphate and moisture which has to a certain extent a hard surface layer, while the core still has the consistency of the original homogenous mixture.

With regard to the metal cations which can be used, these cations will generally be provided in the form of water-soluble calcium or magnesium salts or mixtures thereof. Suitable calcium salts include calcium chloride, calcium acetate and calcium gluconate, although other calcium or magnesium salts which are permitted for use in the food industry can also be used.

The concentration of metal cations used in the precipitation solution is generally, for example in the case of calcium chloride, from 0.1-15% by weight, expediently 0.5-8% by weight and preferably 4-8% by weight.

To set the properties of the desired end product, it is expedient for the homogenous mixture, before it is subjected to a shaping process, to be mixed with desired additives in order to set the properties of the food product to be formed, which properties are selected from flavour, odour, colour and consistency.

Many types of additives can be selected, such as broth, dairy product, processed dairy product, flavourings, fruit juice and of course also mixtures of two or more materials of this type. This list is not exhaustive, since all kinds of possible additives which are not included in the above list will be obvious to the person skilled in the art.

The person skilled in the art will be aware of numerous shaping processes for imparting a desired three-dimensional shape to the homogenous mixture. Mention may be made of a method in which the homogenous mixture is supplied under pressure to a strand-forming head or a ball-forming device. As an alternative to the pump and strand-forming head, it is also possible to use an extruder.

In one attractive embodiment, the material in strand form which is formed is cut into pieces and dried to form an instant food product. The term instant food product is to be understood as meaning a product which is available to the consumer in dry form and which takes up moisture by being mixed with hot or cold water, so that it acquires the consistency which is desired for consumption.

The strand-like material described above that had been cut into pieces was able to take up moisture by softening in water for 5 to 10 minutes to a sufficient extent for the soft consistency of the core to be fully restored. It is also possible to choose not to dry the strand-like material after it has been cut into pieces, but rather to package it directly in order for it to be offered to the consumer as a fresh product.

In another attractive embodiment, the homogenous mixture is shaped into ball-shaped pieces, and these pieces are then brought into contact with the abovementioned metal cation solution.

As before, it is possible to select a residence time for the ball-shaped pieces in the metal cation solution and/or the presence of residual metal cations on the surface of the ball-shaped pieces in such a manner that complete precipitation of the hydrocolloid that is sensitive to metal cations occurs. On the other hand, by washing the ball-shaped pieces with water, it is possible to ensure that the excess of metal cations is removed, so that ball-shaped pieces are obtained with a skin in which there is precipitated hydrocolloid, while the core of the ball-shaped pieces comprises hydrocolloid which is not precipitated with metal cations.

In the case of the ball-shaped pieces too, it is possible to add additives to the homogenous mixture as described above. In this case, the additives may also be formed by, for example, pieces of vegetables, such as courgette or spinach; pieces of fruit, etc.

The possibility of adding additives in order to set properties, such as flavour, odour, colour and consistency, which is mentioned at various points above is expediently used by adding the additives to the above-mentioned homogenous mixture.

Of course, it is also possible for additives to be added at a later stage, i.e. after the shaping step and/or the hydrocolloid precipitation step.

In the latter case, it is possible for liquid additives to be introduced into the product by impregnation.

In yet another attractive embodiment, the composition comprising milk protein material is a liquid dairy product which, after optional dilution with water, is mixed with hydrocolloid that precipitates with metal cations and material that is able to complex calcium ions, such as a phosphate material.

The liquid dairy product can be selected from a wide range of known dessert products, such as chocolate custard, vanilla custard, cream and yogurt, as well as all kinds of known dairy-based dessert products which are generally a mixture of yogurt or soft curd cheese with all kinds of flavour, colour, odour and consistency additives.

As has been mentioned above, in this case too the homogenous mixture can be shaped into ball-shaped pieces before these ball-shaped pieces are brought into contact with the solution containing metal cations.

If the composition comprising milk protein material is not in a specific form as discussed above, the milk protein material may be selected from:
cheesemaking curd (for cheese from 0+ to 60+)
cheese
milk powder
whey protein
alkali metal, alkaline-earth metal and ammonium caseinate.

If the material that is able to complex calcium ions is a phosphate material, it can be selected from the alkali metal and ammonium salts of phosphoric acid and polyphosphoric acid, such as disodium hydrogen phosphate, trisodium phosphate or sodium hexametaphosphate, trisodium phosphate or sodium polyphosphate (NaPO₃)ₙ, where n~25 .

The quantity of phosphate material is at least sufficient to complex the free calcium ions that are present in the milk protein material, and is in particular from 0.1 to 1.5% by weight, based on the total of all the constituents of the homogenous mixture.

The hydrocolloid that precipitates with metal cations may be selected from pectin with a low methoxyl group content, Gellan gum and alginate; of these, sodium alginate is preferred. The hydrocolloid that precipitates with metal cations is generally present in a quantity of from 0.1-10% by weight, based on the total of all the constituents of the homogenous mixture.

The pH of the homogenous mixture of milk protein material, hydrocolloid that precipitates with metal cations, phosphate material and water is set to a pH of between 4 and 8. If a first type of structure of the food product which is similar to a meat-like structure is desired, the pH is set to between 5.0 and 7.5. The first type of structure is a relatively hard material with relatively long fibres.

If a second type of structure, which is softer with shorter fibres, is desired, the pH of the homogenous mixture is set to between 4.5 and 6.0.

In connection with the above, it should be noted that a higher pH of the homogenous mixture is slightly preferred, since in this case the water binding activity is higher than at a lower pH.

The invention also relates to a fibre-comprising food product based on protein obtained with the aid of a method as described above, which is characterized in that the food product is packaged.

The invention also relates to a fibre-comprising food product based on milk protein obtainable by the method according to the invention as described above.

It is expedient for the fibre-comprising food product according to the invention to be subjected to a treatment with a germicidal action before and/or after it has been packaged. A treatment with a germicidal action can be selected from pasteurization, sterilization, treatment with radiation, such a y radiation and the like. However, it is expedient for the treatment with a germicidal action, such as for example pasteurization, to be carried out after packaging of the fibre-comprising food product. Pasteurization may take place at a temperature of 60-90°C for 5-45 min, for example a temperature of 90°C for 45 minutes.

If the homogenous mixture is prepared at temperatures of > 70°C and the fibre-forming step is also carried out at this temperature, there is generally no need for any treatment with a germicidal action.

The following text serves to provide a more detailed explanation of the method described in the PCT patent application PCT/NL02/00594 in the name of the Applicant, which was not published before the filing date of the present application.

In the method described, a homogenous mixture of protein, hydrocolloid that precipitates with metal cations and water is generally produced by stirring at a temperature in the range from 20-90°C, more particularly from 30-90°C and generally at a temperature of approximately 50°C.

At a slightly elevated temperature, the protein will melt or be liquefied and will form a homogenous mixture with the hydrocolloid that precipitates with metal cations and water.

It should be noted that the present application uses the term homogenous mixture to encompass both emulsions, dispersions and solutions.

With some proteins, for example cheese milk protein, if an elevated temperature is used melting will occur, so that the homogenous mixture represents a distribution of two liquid materials which are not soluble in one another, i.e. an emulsion. With other milk proteins, there will be no melting, but rather dispersion or solution will occur.

A number of different embodiments of the preparation of a homogenous mixture are explained below.

Firstly, to form a homogenous mixture starting from cheese curd (cheese curd may be for cheese from 0+ to 60+):
- identical quantities by weight of cheese curd and water are mixed at approximately 50°C (total weight 2A) in the presence of 0.8-1.2% by weight, based on 2A of sodium polyphosphate,
- 2.5-3.5% by weight, based on 2A, of sodium alginate are added with stirring, as well as water at approximately 50°C in a quantity by weight A.

In another embodiment, to form a homogenous mixture starting from cheese:
- identical quantities by weight of grated cheese and water are mixed at approximately 50°C (total weight 2B) in the presence of 0.8-1.2% by weight, based on 2B, of sodium polyphosphate,
- 2.5-3.5% by weight, based on 2B, of sodium alginate are added with stirring, as well as water at approximately 50°C in a quantity by weight B.

In yet another embodiment, a homogenous mixture is formed starting from sodium caseinate by
o a 10-15% strength by weight solution of sodium caseinate in water being made up (total weight C) in the presence of 0.2-0.4% by weight of sodium polyphosphate, based on C,
• butter being added in a quantity of 15-20% by weight, based on C,
• 3-5% by weight, based on C, of sodium alginate being added with stirring, as well as water at approximately 50°C in a quantity by weight of 80-95% by weight, based on C.

In yet another embodiment, a homogenous mixture is prepared by, starting from whey protein:
o making up a 15-20% strength by weight solution of whey protein in water (total weight D) in the presence of 0.2-0.4% by weight of sodium polyphosphate, based on D,
• adding butter in a quantity of 12-18% by weight, based on D,
• adding 3-7% by weight of sodium alginate, based on D, with stirring, as well as water at approximately 50°C in a quantity of 80-85% by weight, based on D.

Starting from skimmed milk powder, a homogenous mixture is prepared, in which
- a 25-35% strength by weight solution is made of skimmed milk powder in water (total weight E) in the presence of 0.5-1.0% by weight, based on E, of sodium polyphosphate,
- butter is added in a quantity of 11-15% by weight, based on E,
- 4-6% by weight, based on E, of sodium alginate is added with stirring, as well as water at approximately 50°C in a quantity of 65-75% by weight, based on E.

Surprisingly, moreover, it has been found that for certain milk protein materials it is even possible to work without the presence of phosphate material, in which case a homogenous mixture can be formed without problems and can be converted into a fibre-comprising food protein product based on milk protein in accordance with the invention.

In one particular embodiment, therefore, in the method described above the protein material comprises a milk protein material selected from milk powder, whey protein and caseinate (in particular food-grade alkali metal or ammonium caseinate), and the method is carried out in the absence of a phosphate material. This is because it has been found that the abovementoned materials either contain little calcium per se (such as alkali metal or ammonium caseinate, in particular sodium caseinate, and whey protein) or contain relatively few free calcium ions (such as milk powder), and in that in such a case good results are obtained even if the phosphate is omitted. One possible explanation for this is that materials of this type undergo a treatment process in which the calcium that is present is substantially removed (alkali metal or ammonium caseinate and whey protein) and/or the calcium is bonded in some way (milk powder).

Therefore, in such situations, the procedure is as follows:
1) a protein material, a hydrocolloid that precipitates with metal cations and water are added to one another,
2) the composition from step 1) is made into a homogenous mixture.

Starting from conventional milk protein materials, a number of examples will be given below in connection with the preparation of a homogenous mixture.

### Example I: Homogenous mixture with cheese curd as starting material

A mixture of 600 grams of curd (Maasdam curd (45+% fat in the dry matter), calcium content: 533 mg/100 g, moisture content 63.4%) and 600 ml of water at a temperature of 55°C and 12 grams of sodium polyphosphate (NaPO₃)ₙ, where n~25, is prepared. The mixture is transferred into a high-speed mixer. With continuous mixing, 40 grams of sodium alginate (Kelco, Manugel DMB) and 600 ml of water are added and mixing was continued until a homogenous mixture had been formed.

The ratio between the weight of cheese curd and the total weight of water is in this case 1 to approximately 3.

### Example II: Homogenous mixture with cheese as starting material

A quantity of 600 grams (50+% fat in dry matter) of cheese of the Maasdam type which has been ripened for 5 weeks (calcium content: 786 mg/100 grams, moisture content 39.5%) in grated form is mixed with 12 grams of sodium polyphosphate and 600 ml of water at approximately 55°C. 40 grams of sodium alginate (Kelco DMB) and 600 ml of water at 55°C are added to this more or less homogenous mass in a high-speed mixer with continuous mixing; mixing was continued until a homogenous mixture had been formed.

### Example III: Homogenous mixture with sodium caseinate as starting material

The starting point was 85 grams of sodium caseinate (DMV International, sodium caseinate) with a calcium content of 76 mg/100 grams, a protein content of 90% and a moisture content of 5%. The sodium caseinate was dissolved in 600 ml of water at 45°C. Two grams of sodium polyphosphate were added. After initial mixing, 30 grams of sodium alginate and 600 ml of hot water were added with intensive stirring; and mixing was continued until a homogenous mixture with a paste-like character had been prepared.

### Example IV: Homogenous mixture with whey protein concentrate as starting material

125 grams of whey protein concentrate (Arla, Lacprodan 80, calcium content: 374 mg/100 grams, moisture content 5.5%) with a protein content of 82% are dissolved in 600 grams of water at 45°C and mixed with 2 grams of sodium polyphosphate and 110 grams of butter. After mixing, 40 grams of sodium alginate and 600 ml of water at 45°C are added to the mixture with intensive stirring; mixing was continued until a homogenous mixture had been formed.

### Example V: Homogenous mixture with milk powder as starting material

The milk protein used is skimmed milk powder (calcium content: 1160 mg/100 grams, moisture content: 4%, protein content: 30%). A quantity of 250 grams was dissolved in 600 ml of water, to which 4 grams of sodium polyphosphate and 110 grams of butter were added. Then, 40 grams of sodium alginate and 600 ml of water were added to this composition, after which mixing was continued until a homogenous mixture had been obtained.

It has been stated above that the embodiment of claim 2 has advantages in terms of the controllability of the process for forming a homogenous mixture. The following examples serve to explain this:
A. Use of dry alginate,
   1200 g of water were added 600 grams of Gouda cheese, together with 18 grams of sodium polyphosphate. At a temperature of 70°C, a cheese emulsion is obtained and is set to a pH of 7 using 10% strength NaOH solution. 50 g of sodium alginate (Kelco Manugel DMB) are added with intensive mixing, resulting in a viscous homogenous mixture (mayonnaise-like in character).
B. Use of dissolved alginate.
   400 g of water and 18 g of sodium polyphosphate were added to 800 grams of cheese, with heating to 70°C. The emulsion obtained is brought to a pH of 7 using NaOH solution. Separately, 35 grams of sodium alginate are dissolved in 1000 g of water. The cheese emulsion and the sodium alginate solution are mixed to form a homogenous mixture.
   Processing of the homogenous mixtures obtained under A) and B) to form a fibre-comprising food product reveals that the final quality of the fibre-comprising food product is identical in terms of the strength of the fibre-comprising skin. Therefore, a comparison of the examples A and B reveals that it is possible to save on sodium alginate.

The homogenous mixtures described above can be mixed with desired additives to set the properties of the food product to be formed, which properties are selected from flavour, odour, colour and consistency; these means may be as described above in the application.

Depending on the desired final shape, the homogenous mixture formed is subjected to a shaping treatment in order to obtain a selected three-dimensional shape. As has already been discussed above, a shape of this nature may be selected from a strand shape, a ball shape or any other geometric shape which may be attractive to the consumer.

The following text will now discuss a number of methods for converting a homogenous mixture prepared above into a food product.

The exemplary embodiments given below are always based on a homogenous mixture which has been prepared as described in Example I above, i.e. starting from Maasdam curd with 45+% fat in dry matter.

### Exemplary Embodiment 1

A homogenous mixture as prepared in Example I was discharged, using a strand-forming device, into 4% strength by weight calcium chloride solution (50 ml homogenous mixture onto 1.5 1 of 4% strength CaCl₂ in water).

A contact time of approx. 10 s was sufficient to obtain a spaghetti/noodle structure.

Washing with tap water prevented complete setting through the entire strand, so that strands with a "hard" skin and a soft core were obtained.

In general terms, a "skin" on a soft core is to be understood as meaning a thin layer with a thickness of 0.1-0.2 mm comprising precipitated milk protein/hydrocolloid fibres, but obviously as a function of the concentration of metal cations with a valency of at least 2 used in the precipitation solution and the duration of treatment with this solution, and also the temperature at which the treatment is carried out. The person skilled in the art will know how to use concentration, duration and temperature to achieve the desired "skin" thickness for a specific case.

The spaghetti/noodles can be consumed as they are (if appropriate after flavouring using the customary materials); it is also possible, for example, for the material to be impregnated with fruit juice, such as strawberry pulp, to form a fruit-type spaghetti/noodle material.

### Exemplary Embodiment 2

During the preparation of the homogenous mixture as indicated above, the cheese curd to be used was dissolved in 700 ml of water instead of 600 ml, after which 500 ml of Yogho Yogho^{®} were added, followed by the selected quantity of alginate (40 grams of sodium alginate (Kelco, Manugel DMB)). The prepared homogenous mixture was discharged with the aid of a pump/strand-forming nozzle combination into 4% by weight of CaCl₂ solution, and spaghetti/noodle-like strands were obtained with a Yogho Yogho^{®} flavour.

Removing the spaghetti/noodle strands from the calcium chloride solution after 10 seconds and thoroughly rinsing the strands with tap water resulted in a product with a "hard" skin and a soft interior.

### Exemplary Embodiment 3

Homogenous mixture obtained from cheese curd was mixed with chicken broth, curry powder and cardamom spices and was processed to form spaghetti/noodles as described above.

### Exemplary Embodiment 4

Homogenous mixture obtained from the processing of cheese curd was discharged by a ball-forming metering device into 4% calcium chloride solution. After 1 minute, ball-shaped pieces with a smooth, rigid structure were obtained.

The homogenous mixture may, before being shaped be mixed with all kinds of additives, such as for example spinach (15% by weight) based on the total of homogenous mixture and additives; korma spice concentrate 3% by weight. On contact with 4% by weight calcium chloride solution, a pleasing smooth structure was likewise obtained, and the additives present were visible by virtue of a contrasting colour.

### Exemplary Embodiment 5

Cheese curd was dissolved in 700 ml of water instead of 600 ml; 500 ml of orange juice were added before the alginate was added. After the alginate and phosphate had been added, a homogenous mixture was formed and was shaped into ball-shaped pieces using a ball-shaping device and then discharged into 4% by weight calcium chloride solution. The ball-shaped pieces obtained, after thorough washing with water, had a skin that comprised hydrocolloid precipitated with metal cations, while the inside of the ball-shaped pieces was soft.

### Exemplary Embodiment 6

The starting point in this example was a composition comprising milk protein in the form of a custard product. One litre of vanilla custard was topped up with 200 ml of water and heated to 70°C.

12 grams of sodium polyphosphate (NaPO₃)ₙ, where n~25, were added and the mixture was transferred to a high-speed mixer.

30 grams of sodium alginate (Kelco, Manugel DMB) were added, and the homogenous mixture obtained was made into a ball shape and discharged into 4% by weight CaCl₂ solution. In this case, after washing the result was ball-shaped pieces whose skin contained alginate precipitated with metal cations and whose core had retained the original structure of the homogenous mixture.

### Exemplary Embodiment 7

A homogenous mixture prepared from cheese curd was mixed with sweets (for example M&M^{®}). The homogenous mixture with the pieces of sweets therein was shaped into ball-shaped pieces which were discharged into 4% by weight CaCl₂ solution. Small balls with a "hard" skin were obtained, and these balls contained one or more small pieces of M&M^{®} sweets enclosed inside a soft core.

It will be clear that the consistency of the above-described balls can be adapted as desired by means of the treatment time.

With a short residence time (for example 10 to 20 seconds) in 4% calcium chloride solution, a "hard" skin with a soft core is obtained. If no washing process is used, the thickness of the skin will grow over the course of time, while after a prolonged period of time all the sodium alginate in the homogenous mixture can be converted into alginate precipitated with calcium ions (obviously depending on the availability of calcium ions in the outer layers of a shaped piece).

If the shaped pieces, immediately after their treatment in the calcium chloride bath, are washed with tap water, the precipitation of the alginate with the aid of calcium ions will be interrupted, producing a shaped part with a skin which contains water-insoluble calcium alginate and a core in which the properties of the original homogenous mixture are retained.

Strands or ball shapes are obtained depending on the method selected to create the three-dimensional shape. By using co-extrusion, it is also possible to opt to apply the homogenous mixture as a sheath around a liquid, pasty or solid centre made from a material with a composition with differs from the composition of the homogenous mixture. The subsequent step of bringing the product formed in this way into contact with an aqueous solution of a metal cation with a valency of at least 2 creates a product with a core which is formed as desired and a sheath which, at least on the outer side, comprises vegetable protein/precipitated hydrocolloid fibres.

## Claims

1. Method for preparing a protein-based, fibre-comprising food product, in which:
1) a hydrocolloid that precipitates with metal cations and a composition that comprises milk protein material are mixed with one another in aqueous solution in the presence of a quantity of a material which is able to complex calcium ions,
2) the composition from 1) is made into a homogenous mixture,
3) the homogenous mixture from 2) is given a selected three-dimensional shape with the aid of a shaping process,
4) the three-dimensional shape from 3) is brought into contact with an aqueous solution of a metal cation with a valency of at least 2 to form a product that comprises precipitated hydrocolloid.

2. Method according to claim 1, **characterized in that** step 1) involves making an aqueous solution of a hydrocolloid that precipitates with metal cations and introducing this hydrocolloid into a liquid composition comprising a milk protein material and a material which is able to complex calcium ions.

3. Method according to claim 1 or 2 **characterized in that** the shaping process for imparting a selected three-dimensional shape to the homogenous mixture is carried out by feeding the homogenous mixture under pressure to a strand-forming head or a ball-forming device.

4. Method according to one or more of claims 1-3, **characterized in that** the homogenous mixture is discharged into an aqueous solution of a metal cation with a valency of at least 2 in order to form a strand which, at least at the surface, comprises hydrocolloid that has been precipitated with metal cations.

5. Method according to claim 4, **characterized in that** the shaped strand is cut into pieces and dried to form an instant food product.

6. Method according to one or more of claims 1-3, **characterized in that** the homogenous mixture is shaped into ball-shaped pieces, and these pieces are brought into contact with a solution of a metal cation with a valency of at least 2.

7. Method according to any one of claim 4 or 6, **characterized in that** the strand, after it has been formed, or the ball-shaped piece, after it has been shaped, is rinsed with water in order to wash out metal cations with a valency of at least 2 that have not yet reacted with hydrocolloid.

8. Method according to one or more of claims 1-6. **characterized in that** the homogenous mixture, before it is subjected to a shaping process, is mixed with desired additives in order to set properties of the food product which is to be formed, these properties being selected from flavour, odour, colour and consistency.

9. Method according to claim 8, **characterized in that** the homogenous mixture is mixed with additives selected from vegetable pieces, fruit juices, broth, flavourings, dairy product, processed dairy product and mixtures of two or more materials of this type.

10. Method according to one or more of claims 1-3, **characterized in that** the composition comprising milk protein material is a liquid dairy product from dessert products, such as chocolate custard, vanilla custard, cream and yogurt.

11. Method according to claim 10, **characterized in that** the homogenous mixture formed in the method is shaped into ball-shaped pieces before it is brought into contact with a solution of a metal cation with a valency of at least 2.

12. Method according to one or more of claims 1-7, **characterized in that** the milk protein material is selected from:
- cheese making curd
- cheese
- milk powder
- whey protein
- alkali metal, alkaline earth metal and ammonium caseinate.

13. Method according to one or more of claims 1-12, **characterized in that** the material which is able to complex calcium ions is a phosphate material is selected from the alkali metal and ammonium salts of phosphoric acid and polyphosphoric acid.

14. Method according to claim 13, **characterized in that** the quantity of phosphate material is at least sufficient to complex the free calcium ions that are present in the milk protein material and to digest the milk protein material.

15. Method according to claim 14, **characterized in that** the quantity of phosphate material amounts to 0.1-1.5% by weight, based on the total of all the constituents of the homogeneous mixture.

16. Method according to one or more of claims 1-6, **characterized in that** the hydrocolloid that precipitates with metal cations is sodium alginate.

17. Method according to claim 16, **characterized in that** the hydrocolloid that precipitates with metal cations is present in a quantity of 0. 1-10% by weight, based on the total of all the constituents of the homogenous mixture.

18. Method according to one or more of claims 1-17, **characterized in that** the shaping process is a co-extrusion method, in which the homogenous mixture is applied as a sheath around a core of a selected solid, pasty or liquid material.

19. Fibre-comprising food product based on milk protein obtainable by the method according to one or more of claims 1-18.

## Patentansprüche

1. Verfahren zum Herstellen eines Fasern umfassenden Lebensmittelprodukts auf Proteinbasis, in welchem:
1) ein Hydrokolloid, welches mit Metallkationen ausfällt, und eine Zusammensetzung, welche Milchproteinmaterial umfasst, in wässriger Lösung in Gegenwart einer Menge eines Materials, welches Calciumionen komplexieren kann, miteinander vermischt werden,
2) aus der Zusammensetzung von 1) eine homogene Mischung hergestellt wird,
3) die homogene Mischung von 2) mit Hilfe eines Formgebungsprozesses eine ausgewählte dreidimensionale Form erhält,
4) die dreidimensionale Form von 3) mit einer wässrigen Lösung eines Metallkations mit einer Wertigkeit von wenigstens 2 in Kontakt gebracht wird, um ein Produkt zu bilden, welches gefälltes Hydrokolloid umfasst.

2. Verfahren nach Anspruch 1, **dadurch gekennzeichnet, dass** Schritt 1) das Herstellen einer wässrigen Lösung eines Hydrokolloids, welches mit Metallkationen ausfällt, und das Einbringen dieses Hydrokolloids in eine flüssige Zusammensetzung umfasst, die ein Milchproteinmaterial und ein Material, welches Calciumionen komplexieren kann, umfasst.

3. Verfahren nach Anspruch 1 oder 2, **dadurch gekennzeichnet, dass** der Formgebungsprozess, der dazu dient, der homogenen Mischung eine ausgewählte dreidimensionale Form zu geben, **dadurch** ausgeführt wird, dass die homogene Mischung unter Druck einem einen Strang bildenden Kopf oder einer eine Kugel bzw. einen Kloß bildenden Vorrichtung zugeführt wird.

4. Verfahren nach einem oder mehreren der Ansprüche 1-3, **dadurch gekennzeichnet, dass** die homogene Mischung in eine wässrige Lösung eines Metallkations mit einer Wertigkeit von wenigstens 2 eingetragen wird, um einen Strang zu bilden, welcher wenigstens auf der Oberfläche Hydrokolloid umfasst, das mit Metallkationen ausgefällt worden ist.

5. Verfahren nach Anspruch 4, **dadurch gekennzeichnet, dass** der geformte Strang in Stücke geschnitten und getrocknet wird, um ein Instant-Lebensmittelprodukt zu bilden.

6. Verfahren nach einem oder mehreren der Ansprüche 1-3, **dadurch gekennzeichnet, dass** die homogene Mischung zu kugelförmigen Stücken geformt wird und diese Stücke mit einer Lösung eines Metallkations mit einer Wertigkeit von wenigstens 2 in Kontakt gebracht werden.

7. Verfahren nach einem der Ansprüche 4 oder 6, **dadurch gekennzeichnet, dass** der Strang, nachdem er geformt worden ist, oder das kugelförmige Stück, nachdem es geformt worden ist, mit Wasser gespült wird, um Metallkationen mit einer Wertigkeit von wenigstens 2 auszuwaschen, welche noch nicht mit Hydrokolloid reagiert haben.

8. Verfahren nach einem oder mehreren der Ansprüche 1-6, **dadurch gekennzeichnet, dass** die homogene Mischung, bevor sie einem Formgebungsprozess unterworfen wird, mit gewünschten Zusätzen vermischt wird, um Eigenschaften des Lebensmittelprodukts einzustellen, welches geformt werden soll, wobei diese Eigenschaften ausgewählt sind aus dem Geschmack, dem Geruch, der Farbe und der Konsistenz.

9. Verfahren nach Anspruch 8, **dadurch gekennzeichnet, dass** die homogene Mischung mit Zusätzen, ausgewählt aus Pflanzen- bzw. Gemüsestücken, Fruchtsäften, Brühe, Aromastoffen, einem Milchprodukt, einem verarbeiteten Milchprodukt und Mischungen von zwei oder mehr Materialien dieses Typs, vermischt wird.

10. Verfahren nach einem oder mehreren der Ansprüche 1-3, **dadurch gekennzeichnet, dass** die Zusammensetzung, die Milchproteinmaterial umfasst, ein flüssiges Milchprodukt, ausgewählt aus Dessertprodukten, wie Schokoladenpudding, Vanillepudding, Sahne bzw. Creme und Joghurt, ist.

11. Verfahren nach Anspruch 10, **dadurch gekennzeichnet, dass** die in dem Verfahren gebildete homogene Mischung zu kugelförmigen Stücken geformt wird, bevor sie mit einer Lösung eines Metallkations mit einer Wertigkeit von wenigstens 2 in Kontakt gebracht wird.

12. Verfahren nach einem oder mehreren der Ansprüche 1-7, **dadurch gekennzeichnet, dass** das Milchproteinmaterial ausgewählt ist aus:
- Käsebruch
- Käse
- Milchpulver
- Molkenprotein
- Alkalimetall-, Erdalkalimetall- und Ammoniumcaseinat

13. Verfahren nach einem oder mehreren der Ansprüche 1-12, **dadurch gekennzeichnet, dass** das Material, welches Calciumionen komplexieren kann, ein Phosphatmaterial ist, welches ausgewählt ist aus den Alkalimetall- und Ammoniumsalzen von Phosphorsäure und Polyphosphorsäure.

14. Verfahren nach Anspruch 13, **dadurch gekennzeichnet, dass** die Menge an Phosphatmaterial wenigstens ausreichend ist, um die freien Calciumionen zu komplexieren, welche in dem Milchproteinmaterial vorhanden sind, und um das Milchproteinmaterial zu digerieren.

15. Verfahren nach Anspruch 14, **dadurch gekennzeichnet, dass** die Menge an Phosphatmaterial 0,1-1,5 Gew.-%, bezogen auf die Gesamtmenge aller Bestandteile der homogenen Mischung, beträgt.

16. Verfahren nach einem oder mehreren der Ansprüche 1-6, **dadurch gekennzeichnet, dass** das Hydrokolloid, welches mit Metallkationen ausfällt, Natriumalginat ist.

17. Verfahren nach Anspruch 16, **dadurch gekennzeichnet, dass** das Hydrokolloid, welches mit Metallkationen ausfällt, in einer Menge von 0,1-10 Gew.-%, bezogen auf die Gesamtmenge aller Bestandteile der homogenen Mischung, vorhanden ist.

18. Verfahren nach einem oder mehreren der Ansprüche 1-17, **dadurch gekennzeichnet, dass** der Formgebungsprozess ein Coextrusionsverfahren ist, in welchem die homogene Mischung als eine Hülle um einen Kern aus einem ausgewählten festen, pastenartigen oder flüssigen Material herum aufgebracht wird.

19. Fasern umfassendes Lebensmittelprodukt auf der Basis von Milchprotein, erhältlich durch das Verfahren nach einem oder mehreren der Ansprüche 1-18.

## Revendications

1. Procédé pour la préparation d'un produit alimentaire comprenant des fibres et à base de protéines, dans lequel :
1) un hydrocolloïde qui précipite avec des cations métalliques et une composition qui comprend une matière protéique du lait sont mélangés dans une solution aqueuse en présence d'une certaine quantité d'une matière qui est capable de complexer les ions calcium,
2) la composition de 1) est transformée en un mélange homogène,
3) on donne au mélange homogène du point 2) une forme en trois dimensions choisie, à l'aide d'un processus de mise en forme,
4) la forme en trois dimensions de 3) est mise en contact avec une solution aqueuse d'un cation métallique ayant une valence d'au moins 2 afin de former un produit qui comprend un hydrocolloïde précipité.

2. Procédé selon la revendication 1, **caractérisé en ce que** l'étape 1) implique de préparer une solution aqueuse d'un hydrocolloïde qui précipite avec des cations métalliques et d'introduire cet hydrocolloïde dans une composition liquide comprenant une matière protéique du lait et une matière qui est capable de complexer les ions calcium.

3. Procédé selon la revendication 1 ou 2, **caractérisé en ce que** le procédé de mise en forme visant à donner une forme choisie en trois dimensions au mélange homogène est réalisé en introduisant le mélange homogène sous pression dans une tête destinée à façonner des brins ou un dispositif pour former des billes.

4. Procédé selon l'une ou plusieurs des revendications 1 à 3, **caractérisé en ce que** le mélange homogène est déversé dans une solution aqueuse d'un cation métallique ayant une valence d'au moins 2 afin de former un brin qui, au moins au niveau de la surface, comprend un hydrocolloïde qui a été précipité avec des cations métalliques.

5. Procédé selon la revendication 4, **caractérisé en ce que** le brin mis en forme est découpé en morceaux et séché afin de former un produit alimentaire instantané.

6. Procédé selon l'une ou plusieurs des revendications 1 à 3, **caractérisé en ce que** le mélange homogène est mis en forme en morceaux ayant la forme de bille, et ces morceaux sont mis en contact avec une solution d'un cation métallique ayant une valence d'au moins 2.

7. Procédé selon l'une quelconque des revendications 4 ou 6, **caractérisé en ce que** le brin, après avoir été mis en forme, ou le morceau en forme de bille, après avoir été mis en forme, est rincé avec de l'eau afin d'éliminer les cations métalliques ayant une valence d'au moins 2 qui n'ont pas encore réagi avec l'hydrocolloïde.

8. Procédé selon l'une ou plusieurs des revendications 1 à 6, **caractérisé en ce que** le mélange homogène, avant d'être soumis au procédé de mise en forme, est mélangé avec des additifs choisis afin d'obtenir l'ensemble des propriétés du produit alimentaire qui doit être mis en forme, ces propriétés étant choisies parmi l'arôme, l'odeur, la couleur et la consistance.

9. Procédé selon la revendication 8, **caractérisé en ce que** le mélange homogène est mélangé avec des additifs choisis parmi des morceaux de légumes, des jus de fruits, un bouillon, des arômes, des produits laitiers, des produits laitiers transformés et des mélanges de deux éléments de ce type ou plus.

10. Procédé selon l'une ou plusieurs des revendications 1 à 3, **caractérisé en ce que** la composition comprenant la matière protéique du lait est un produit laitier liquide choisi parmi des produits de type dessert, comme la crème au chocolat, la crème à la vanille, la crème et le yaourt.

11. Procédé selon la revendication 10, **caractérisé en ce que** le mélange homogène obtenu selon le procédé est mis en forme en morceaux ayant la forme de billes, avant d'être mis en contact avec une solution d'un cation métallique ayant une valence d'au moins 2.

12. Procédé selon l'une ou plusieurs des revendications 1 à 7, **caractérisé en ce que** la matière protéique du lait est choisie parmi:
- caillé pour fromage
- fromage
- poudre de lait
- protéine lactosérique
- caséinate de metal alcalin, caséinate de métal alcalino-terreux et caséinate d'ammonium.

13. Procédé selon l'une ou plusieurs des revendications 1 à 12, **caractérisé en ce que** la matière qui est capable de complexer les ions calcium est un matériau de phosphate choisi parmi des sels métaux alcalins de l'acide phosphorique, des sels d'ammonium de l'acide phosphorique et de l'acide polyphosphorique.

14. Procédé selon la revendication 13, **caractérisé en ce que** la quantité de matériau de phosphate est au moins suffisante pour complexer les ions calcium libres qui sont présents dans la matière protéique du lait et pour digérer la matière protéique du lait.

15. Procédé selon la revendication 14, **caractérisé en ce que** la quantité de matériau de phosphate représente de 0,1 % à 1,5 % en poids, par rapport au poids total de tous les constituants du mélange homogène.

16. Procédé selon l'une ou plusieurs des revendications 1 à 6, **caractérisé en ce que** l'hydrocolloïde qui précipite avec les cations métalliques est l'alginate de sodium.

17. Procédé selon la revendication 16, **caractérisé en ce que** l'hydrocolloïde qui précipite avec les cations métalliques est présent en une quantité allant de 0,1 % à 10 % en poids, par rapport au poids total de tous les constituants du mélange homogène.

18. Procédé selon l'une ou plusieurs des revendications 1 à 17, **caractérisé en ce que** le procédé de mise en forme est un procédé de co-extrusion, dans lequel le mélange homogène est appliqué sous forme d'une enveloppe disposée autour d'un noyau fait d'un matériau sélectionné solide, pâteux ou liquide.

19. Produit alimentaire comprenant des fibres, à base de protéine du lait pouvant être obtenu par le procédé selon l'une ou plusieurs des revendications 1 à 18.
